# EUROPÄISCHE PATENTSCHRIFT

(11) **EP 1 058 791 B1**
(45) Veröffentlichungstag und Bekanntmachung des Hinweises auf die Patenterteilung: **12.02.2003**
(21) Anmeldenummer: 98961230.4
(22) Anmeldetag: 26.11.1998
(51) Int. Cl.: F16C 19/46, F16C 33/66

(54) **NADELLAGER**
NEEDLE BEARING
ROULEMENT A AIGUILLES

(30) Priorität: 04.03.1998 DE 19809171
(43) Veröffentlichungstag der Anmeldung: 13.12.2000
(73) Patentinhaber: INA-Schaeffler KG, 91074 Herzogenaurach (DE)
(72) Erfinder: BODE, Helmut, D-91074 Herzogenaurach (DE)
(86) Internationale Anmeldenummer: EP9807635
(87) Internationale Veröffentlichungsnummer: WO99045284

(56) Entgegenhaltungen:
- CH-A- 356 644
- DE-A- 4 337 466
- DE-A- 19 505 740
- DE-U- 1 937 143
- DE-U- 7 335 363
- FR-A- 945 700
- US-A- 2 251 555
- SOVIET PATENTS ABSTRACTS Section PQ, Week 9301 Derwent Publications Ltd., London, GB; Class Q62, AN 93-007572 XP002100458 & SU 1 712 694 A (KASYLKASOV ZHENYS M) , 15. Februar 1992

## Beschreibung

Die Erfindung betrifft ein Nadellager mit einem Außenring, der an seinen beiden Enden in einen Bord oder der an einem seiner beiden Enden in einen Bord und am anderen Ende in einen geschlossenen Boden übergeht und mit in einem Käfig geführten Lagemadeln, sowie einem im Lager angeordneten Schmiermittelvorratsraum.

### Hintergrund der Erfindung

Derartige Nadellager sind als Lager kleinster radialer Bauhöhe allgemein bekannt und bestehen aus einem Außenring und einem Nadelkranz, die zusammen eine Baueinheit bilden. Diese Lager ermöglichen besonders kostengünstige Wälzlagerungen mit hoher Tragfähigkeit. Die exakte Führung der Nadelrollen im Käfig sichert die einwandfreie Funktion eines derartigen Lagers auch bei hohen Drehzahlen (INA-Katalog Nadellager, Zylinderrollenlager 306, 1991).

Die im Lager vorhandenen und mit Schmiermittel gefüllten Vorratsräume sorgen dafür, daß das Lager über einen längeren Zeitraum einwandfrei geschmiert werden kann, wodurch dessen Lebensdauer erhöht wird.

Nachteilig dabei ist, daß aufgrund der kleinen radialen Bauhöhe auch die Größe der Schmiermittelvorratsräume begrenzt ist.

Diesen Mangel hat man gemäß der DE 44 41 237 A1 dadurch abzuhelfen versucht, indem zwischen einem Bord und den Lagernadeln ein zusätzlicher Schmiermittelvorratsraum gebildet wurde. Dies erfolgte beispielsweise derart, daß der Bord an seiner inneren Stirnfläche gleichmäßig über den Umfang verteilt angeordnete axiale Ausbauchungen aufweist, so daß zwischen diesen Freiräume zur Aufnahme von Schmiermittel gebildet werden. Eine andere Möglichkeit gemäß dieser Vorveröffentlichung wird dadurch realisiert, dass zwischen dem Bord und dem Bord des Lagerkäfigs ein Kreisring angeordnet ist, der wenigstens über einen Teil seiner radialen Ausdehnung gleichmäßig über den Umfang verteilt dem Käfig zugewandte Erhebungen besitzt, so dass zwischen diesen Freiräumen zur Aufnahme von Schmiermittel gebildet sind.

Der Nachteil dieser Lösungen liegt darin, daß einerseits die Schaffung dieser zusätzlichen Schmiermittelvorratsräume zwischen Bord und Lagemadeln sehr aufwendig ist und andererseits die axiale Baulänge einer solchen Lagerung erhöht wird.

Aus der DE 195 05 740 A1, die als nächstliegender Stand der Technik angesehen wird, ist eine Kurvenrolle bekannt, die einen Schmiermittelvorratsraum derart bildet, dass nebeneinanderliegende zylindrische Wälzkörper an ihren Stirnseiten durch einen im Durchmesser kleineren Zapfen miteinander verbunden sind, d. h. es entsteht eine Art Doppelrolle. Der Schmiermittelvorratsraum wird durch den Außenring, den Innenring und den die zylindrischen Wälzkörper verbindenden Zapfen begrenzt. Nun kann es aber durchaus sein, dass bei kleiner radialer Bauweise ein solcher Schmiermittelvorratsraum nicht ausreichend ist.

### Zusammenfassung der Erfindung

Aufgabe der Erfindung ist es daher, für ein gattungsgemäßes Nadellager einen zusätzlichen Schmiermittelvorratsraum zu schaffen, der mit einfachen Mitteln herstellbar ist und der die axiale Baulänge einer solchen Lagerung nicht in unerwünschter Weise vergrößert.

Erfindungsgemäß wird diese Aufgabe durch ein Nadellager mit folgenden technischen Merkmalen gelöst:
- einem Außenring, der an seinen beiden Enden in einen Bord oder der an einem seiner beiden Enden in einen Bord und am anderen Ende in einen geschlossenen Boden übergeht,
- in einem Käfig geführten Lagemadeln,
- einem im Lager angeordneten Schmiermittelvorratsraum, der durch eine im Außenring angeordnete Nut und durch Mittelteile der Lagemadeln gebildet ist, wobei die Mittelteile in ihrem Durchmesser gegenüber dem übrigen Durchmesser der Lagernadeln verringert sind.

Die Herstellung der in Richtung der Lagemadeln weisenden Nut läßt sich problemlos in den Gesamtfertigungsvorgang des Außenringes integrieren, so daß komplizierte Formgebungsvorgänge bzw. Ausstanzungen an den Borden entbehrlich sind. Auch eine zusätzliche Fertigung von Bauteilen zur Vergrößerung des Fettvorratsraumes ist nicht mehr notwendig. Ebenso ist die Herstellung der in ihrem Mittelteil im Durchmesser verringerten Lagemadeln kein technisches Problem. Bedingt durch die erfindungsgemäße Ausgestaltung des Nadellagers wird auch dessen axiale Baulänge nicht unnötig verlängert, da der Schmiermittelvorratsraum lediglich durch eine geringfügige Einschränkung der Tragfähigkeit erkauft wird. Darüber hinaus wird durch einen vergrößerten Schmiermittelvorratsraum ermöglicht, daß ein Lager kleiner radialer Bauhöhe auf Lebensdauer geschmiert bzw. die Nachschmierfrist verlängert werden kann.

Vorteilhafte Ausgestaltungen der Erfindung sind in den nachstehend aufgeführten Unteransprüchen beschrieben. So ist nach Anspruch 2 vorgesehen, daß sich die Nut über den gesamten Umfang der inneren Mantelfläche des Außenringes oder nur über einen Teil davon erstreckt. Aus Anspruch 3 geht hervor, daß zwischen den Lagemadeln und den Borden eine Dichtung angeordnet sein soll. Derart abgedichtete Nadellager, die zumeist Lippendichtungen aufweisen, schützen das Lager unter Betriebsbedingungen vor Schmutz und Spritzwasser sowie vor Verlust von Schmierstoff.

Die Erfindung wird an nachstehendem Ausführungsbeispiel näher erläutert.

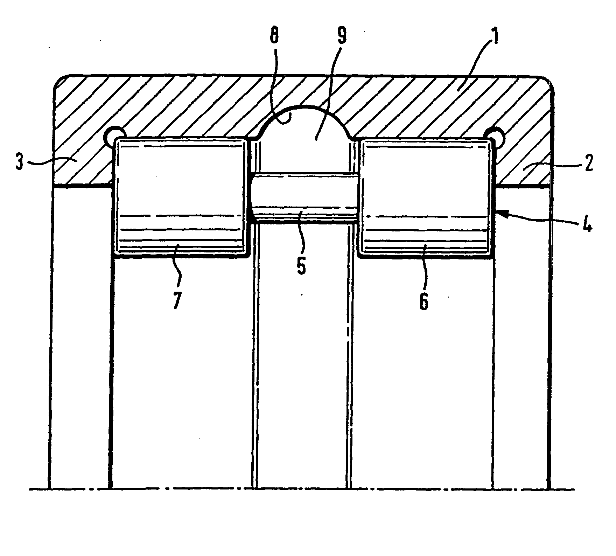

### Kurze Beschreibung der Zeichnung

Die einzige Figur zeigt einen Axiallschnitt durch ein erfindungsgemäß ausgebildetes Nadellager.

### Ausführliche Beschreibung der Zeichnung

Das in der einzigen Figur gezeigte erfindungsgemäße Nadellager besteht aus einem Außenring 1, der an seinen beiden Enden mit je einem radial nach innen gerichteten Bord 2 und 3 versehen ist. Zwischen diesen beiden Borden 2 und 3 sind in einem nicht gezeichneten Käfig Lagemadeln 4 angeordnet, die aus einem Mittelteil 5 und zwei Außenteilen 6 und 7 bestehen, wobei der Mittelteil 5 in seinem Durchmesser gegenüber den Außenteilen 6 und 7 verringert ist.

Durch diese abgestufte Lagernadel 4, auch als Knochenrolle bezeichnet und eine im Außenring 1 angeordnete Nut 8 ist ein Vorratsraum 9 zur Aufnahme von Schmiermittel gebildet. Dieser mit Schmiermittel gefüllte Vorratsraum 9 wird von der Mantelfläche des Mittelteils 5, den beiden einander zugewandten Stirnflächen der Außenteile 6 und 7, sowie der Nut 8 des Außenringes 1 begrenzt.

### Bezugszeichen

- 1: Außenring
- 2: Bord
- 3: Bord
- 4: Lagernadel
- 5: Mittelteil
- 6: Außenteil
- 7: Außenteil
- 8: Nut
- 9: Vorratsraum

## Patentansprüche

1. Nadellager mit folgenden Merkmalen:
- einem Außenring (1), der an seinen beiden Enden in einen Bord (2,3) oder der an einem seiner beiden Enden in einen Bord (2,3) und am anderen Ende in einen geschlossenen Boden übergeht,
- in einem Käfig geführten Lagemadeln (4),
- einem im Lager angeordneten Schmiermittelvorratsraum (9), der durch eine im Außenring (1) angeordnete Nut (8) und durch Mittelteile (5) der Lagemadeln (4) gebildet ist, wobei die Mittelteile (5) in ihrem Durchmesser gegenüber dem übrigen Durchmesser der Lagemadeln (4) verringert sind.

2. Nadellager nach Anspruch 1 wobei sich die Nut (8) über den gesamten Umfang der inneren Mantelfläche des Außenringes (1) oder nur über einen Teil davon erstreckt.

3. Nadellager nach Anspruch 1 mit einer Dichtung, die zwischen den Lagemadeln (4) und den Borden (2,3) angeordnet ist.

## Claims

1. Needle bearing having the following features:
- an outer ring (1) which merges at both ends into a rim (2, 3) or which merges at one of its two ends into a rim (2, 3) and at the other end into a closed base,
- bearing needles (4) guided in a cage,
- a lubricant storage area (9) provided in the bearing, which is formed by a groove (8) provided in the outer ring (1) and by central portions (5) of the bearing needles (4), the central portions (5) being smaller in diameter than the rest of the bearing needles (4).

2. Needle bearing according to claim 1, wherein the groove (8) extends over the entire circumference of the inner covering surface of the outer ring (1) or only over part thereof.

3. Needle bearing according to claim 1 having a seal which is arranged between the bearing needles (4) and the rims (2, 3).

## Revendications

1. Roulement à aiguilles présentant les caractéristiques suivantes :
- une bague externe (1) qui se prolonge à ses deux extrémités par un bord (2, 3), ou à une de ses extrémités par un bord (2, 3) et à l'autre extrémité par un fond fermé,
- des aiguilles de roulement (4) guidées dans une cage (4),
- dans le roulement un espace (9), de réserve d'agent lubrifiant constitué par une gorge (8) creusée dans la bague externe (1) et par les parties centrales (5) des aiguilles de roulement (4), ces parties centrales (5) ayant un diamètre plus faible que le reste des aiguilles (4).

2. Roulement à aiguilles selon la revendication 1,
**caractérisé en ce que**
la gorge (8) s'étend sur toute la périphérie de la surface intérieure de la bague externe (1) ou seulement sur une partie de cette périphérie.

3. Roulement à aiguilles selon la revendication 1,
**caractérisé en ce qu'**
il comporte un joint d'étanchéité monté entre les aiguilles (4) et les bords (2, 3).
